# EUROPÄISCHE PATENTSCHRIFT

(11) **EP 2 626 513 B1**
(45) Veröffentlichungstag und Bekanntmachung des Hinweises auf die Patenterteilung: **17.01.2018**
(21) Anmeldenummer: 12154929.9
(22) Anmeldetag: 10.02.2012
(51) Int. Cl.: F01D 1/04, F04D 29/54, F04D 29/56, F01D 5/14, F01D 9/04

(54) **Tandem-Schaufelanordnung**
Tandem blade assembly
Ensemble d'aubes en tandem

(43) Veröffentlichungstag der Anmeldung: 14.08.2013
(73) Patentinhaber: MTU Aero Engines AG, 80995 München (DE)
(72) Erfinder: Elorza Gomez, Sergio, 80997 München (DE); Schneider, Tim, 85221 Dachau (DE)

(56) Entgegenhaltungen:
- EP-A2- 0 823 540
- EP-A2- 2 261 463
- EP-A2- 2 463 480
- DE-A1- 3 237 669
- GB-A- 752 674
- US-A- 2 982 361
- US-A- 3 692 425
- US-A- 3 867 062
- US-A- 3 883 264

## Beschreibung

Die Erfindung betrifft eine Strömungsmaschine nach dem Oberbegriff des Patentanspruchs 1.

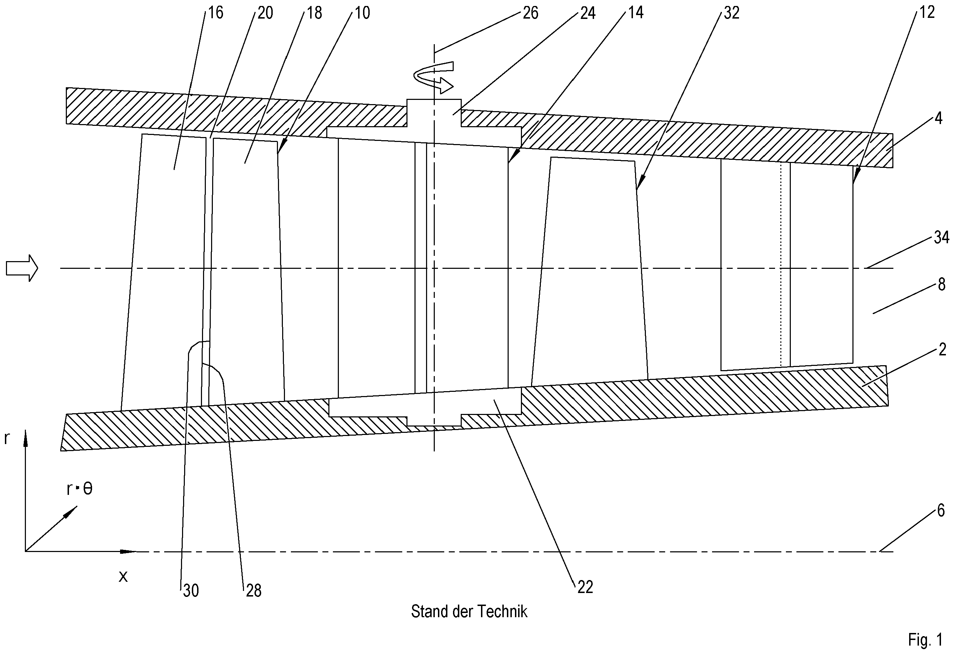

Die maximale Umlenkung einer Schaufelreihe einer Strömungsmaschine und somit deren aerodynamische Belastbarkeit ist zum einen durch eine Strömungsablösung am Schaufelprofil begrenzt. Zum anderen wird die maximale Umlenkung durch eine Ablösung einer Grenzschichtströmung an naben- und gehäuseseitigen Seitenwänden begrenzt. Zur Erhöhung der Umlenkfähigkeit von Schaufelreihen sind doppelreihige Schaufelanordnungen bekannt. Eine bekannte Strömungsmaschine mit einer derartigen Anordnung ist in Figur 1 gezeigt. Diese hat eine Nabe 2, die in einem Gehäuse 4 um eine sich in Längsrichtung x erstreckende Rotorachse 6 drehbar gelagert ist. Die Nabe 2 und das Gehäuse 4 begrenzen einen ringförmigen Hauptstrompfad 8, der gemäß dem waagerechten Pfeil von links nach rechts durchströmt wird und in dem beispielsweise eine rotorseitige Schaufelreihengruppe 10, eine statorseitige Schaufelreihengruppe 12 und eine verstellbare Schaufelreihengruppe 14 angeordnet ist. Die Schaufelreihengruppen 10, 12, 14 weisen jeweils zwei in Strömungsrichtung hintereinander angeordnete Schaufelreihen mit einer Vielzahl von Schaufeln 16, 18 auf. Aus Gründen der Übersichtlichkeit ist vorrangig die rotorseitige Schaufelreihengruppe 10 im Folgenden mit Bezugsziffern versehen. Die rotorseitige Schaufelreihengruppe 10 und die statorseitige Schaufelreihengruppe 12 sind jeweils fest mit der Nabe 2 bzw. mit dem Gehäuse 4 verbunden, wobei zwischen Blattspitzen der Schaufeln 16, 18 und dem Gehäuse 4 bzw. der Nabe 2 ein Spalt 20 gebildet ist. Die Schaufeln 16, 18 der verstellbaren Schaufelreihengruppe 14 sind endseitig jeweils an einem Drehteller 22, 24 gelagert und gemäß dem Drehpfeil um eine Querachse 26 verschwenkbar. Die vorderen Schaufeln 16 haben jeweils eine den hinteren Schaufeln 18 zugewandte Hinterkante 28. Die hinteren Schaufeln 18 haben jeweils eine der vorderen Schaufeln 16 zugewandte Vorderkante 30. Die Kanten 28, 30 sind geradlinig ausgebildet und erstrecken sich radial nahezu quer zur Querstromrichtung, so dass zwischen den Kanten 28, 30 und somit zwischen den Schaufeln 16, 18 ein konstanter axialer Kantenabstand konstant gebildet ist. Ferner ist zwischen den Kanten 28, 30 ein konstanter Kantenabstand in Umfangsrichtung gebildet. Zudem weisen die Schaufeln 16, 18 einen konstanten Engquerschnitt, einen konstanten druckseitigen Überdeckungsgrad und einen konstanten saugseitigen Überdeckungsgrad auf. Des Weiteren ist in Figur 1 eine Schaufel 32 einer einzelnen Rotorschaufelreihe gezeigt.

Es hat sich jedoch gezeigt, dass im Seitenwandbereich, d.h. im Bereich der Nabe 2 und/oder des Gehäuses 4 aufgrund des Grenzschichteinflusses eine von einer Hauptstrompfadmitte 34 abweichende Schaufelkonturierung notwendig ist, mittels welcher die gegenüber der Hauptstrompfadmitte 34 geänderte Strömungsbedingungen im Seitenwandbereich berücksichtigt werden können. In der EP 2 261 463 A2 wird daher bei Schaufelreihengruppen vorgeschlagen, einen meridionalen Abstand zwischen den Hinterkanten der vorderen Schaufeln und den Vorderkanten der hinteren Schaufeln derart einzustellen, dass dieser von einer Hauptstrompfadmitte in Richtung einer naben- oder gehäuseseitigen Seitenwand zunimmt.

Aufgabe der Erfindung ist es, eine Strömungsmaschine mit optimierten Strömungsverhältnissen zu schaffen.

Diese Aufgabe wird gelöst durch eine Strömungsmaschine mit den Merkmalen des Patentanspruchs 1.

Eine erfindungsgemäße Strömungsmaschine hat zumindest eine Schaufelreihengruppe, die in einem Hauptstrompfad angeordnet ist und zumindest zwei in Hauptstromrichtung betrachtet benachbarte Schaufelreihen mit jeweils einer Vielzahl von Schaufeln aufweist. Erfindungsgemäß hat die Strömungsmaschine einen Engquerschnitt und einen Überdeckungsgrad zwischen den Schaufeln der stromaufwärtigen Schaufelreihe und den Schaufeln der stromabwärtigen Schaufelreihe, die ausgehend von einer Hauptstrompfadmitte in Richtung zumindest einer Hauptstrombegrenzung variieren.

Durch den ausgehend von der Hauptstrompfadmitte in Richtung zumindest einer Hauptstrombegrenzung variierenden Engquerschnitt und den variierenden Überdeckungsgrad wird die Positionierung der Schaufeln zueinander und deren Interaktion an die Hauptströmung im Seitenwandbereich angepasst, wodurch eine ablösungsfreie Schaufelreihendurchströmung begünstigt wird. Durch die radiale Änderung der Schaufelanordnung, erfindungsgemäß des von zwei Schaufeln gebildeten Engquerschnitts sowie dessen saugseitiger und/oder druckseitiger Überdeckungsgrad, werden geänderte Strömungsrandbedingungen im Seitenwandbereich berücksichtigt und Strömungsablösungen im Seitenwandbereich vermindert. Die erfindungsgemäßen Verläufe der Engquerschnitte und der Überdeckungsgrade können auf jegliche Art von Beschaufelung angewandt werden. Beispiele sind Rotoren mit Spalt- oder Deckband, Statoren mit Spalt, Halbspalt oder ohne Spalt sowie Verstellstatoren.

Bei einem Ausführungsbeispiel nimmt der Engquerschnitt in Richtung der Hauptstrombegrenzung stetig zu.

Dabei kann der Engquerschnitt in Richtung der Hauptstrombegrenzung zunehmen und dann abnehmen.

Alternativ kann der Engquerschnitt in Richtung der Hauptstrombegrenzung zunehmen und dann konstant verlaufen.

Bei einem anderen Ausführungsbeispiel nimmt der Engquerschnitt in Richtung der Hauptstrombegrenzung stetig ab.

Dabei kann der Engquerschnitt in Richtung der Hauptstrombegrenzung abnehmen und dann zunehmen.

Alternativ kann der Engquerschnitt in Richtung der Hauptstrombegrenzung abnehmen und dann konstant verlaufen.

Bei einem Ausführungsbeispiel nimmt der Überdeckungsgrad in Richtung der Hauptstrombegrenzung stetig zu.

Dabei kann der Überdeckungsgrad in Richtung der Hauptstrombegrenzung zunehmen und dann abnehmen.

Alternativ kann der Überdeckungsgrad in Richtung der Hauptstrombegrenzung zunehmen und dann konstant verlaufen.

Bei einem anderen Ausführungsbeispiel nimmt der Überdeckungsgrad in Richtung der Hauptstrombegrenzung stetig ab.

Dabei kann der Überdeckungsgrad in Richtung der Hauptstrombegrenzung abnehmen und dann zunehmen.

Alternativ kann der Überdeckungsgrad in Richtung der Hauptstrombegrenzung abnehmen und dann konstant verlaufen.

Der Engquerschnitt und der Überdeckungsgrad können jeweils ausgehend von der Hauptstrompfadmitte in Richtung beider Hauptstrombegrenzungen variieren.

Dabei können der Engquerschnitt und der Überdeckungsgrad jeweils in Richtung der Hauptstrombegrenzungen identische oder variierende Verläufe aufweisen.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:
- Figur 1: einen Längsschnitt durch einen Hauptstrompfad einer bekannten Strömungsmaschine,
- Figur 2: eine Draufsicht auf eine Axialebene eines Ausführungsbeispiels einer erfindungsgemäßen Schaufelreihengruppe in Düsenanordnung mit positiven Überdeckungsgraden,
- Figur 3: eine Detaildarstellung aus Figur 2,
- Figur 4: eine Draufsicht auf eine Axialebene eines Ausführungsbeispiels einer erfindungsgemäßen Schaufelreihengruppe in Diffusoranordnung mit positiven Überdeckungsgraden,
- Figur 5: eine Detaildarstellung aus Figur 4,
- Figur 6: eine Draufsicht auf eine Axialebene einer Schaufelreihengruppe mit negativen Überdeckungsgraden,
- Figur 7: eine Detaildarstellung aus Figur 6,
- Figur 8: beispielhafte Verläufe von erfindungsgemäßen Engquerschnitten,
- Figur 9: beispielhafte Verläufe von erfindungsgemäßen Überdeckungsgraden, und
- Figur 10: weitere beispielhafte Verläufe von erfindungsgemäßen Überdeckungsgraden.

Im Folgenden tragen gleiche konstruktive Elemente vorrangig gleiche Bezugszeichen, wobei aus Gründen der Übersichtlichkeit nur einzelne der Elemente mit einem Bezugszeichen versehen sein können.

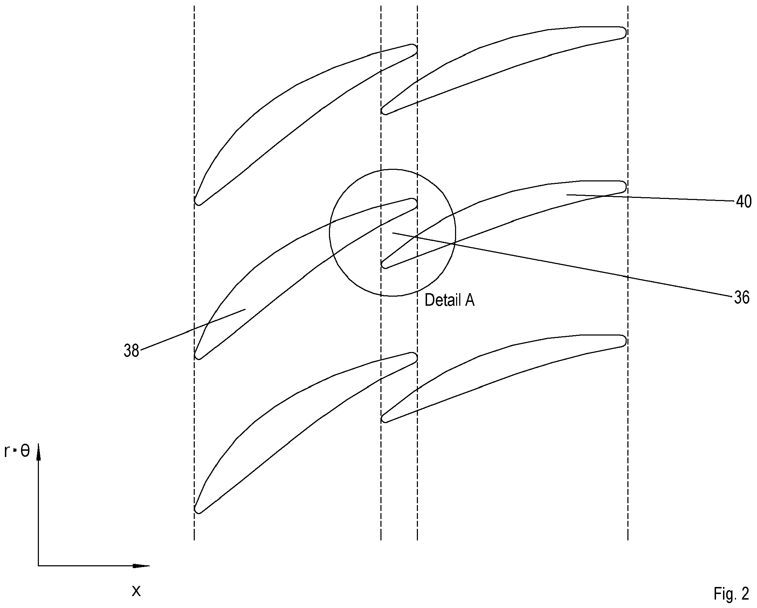

Figur 2 zeigt eine Draufsicht auf einen Umfangsabschnitt einer Schaufelreihengruppe einer Strömungsmaschine, beispielsweise eine stationäre Gasturbine oder ein Flugzeugtriebwerk. Die Schaufelreihengruppe hat zumindest zwei in Hauptstromrichtung benachbarte Schaufelreihen mit jeweils einer Vielzahl von Schaufeln 38 und 40. Die hinteren Schaufeln 40 sind druckseitig der vorderen Schaufeln 38 angeordnet, wobei ein Strömungskanal 36 zwischen den Schaufeln 38, 40 düsenartig verengt ist. "Druckseitig" heißt nahe der Druckseite einer vorderen Schaufel 38 und entfernt von einer Saugseite einer benachbarten vorderen Schaufel 38.

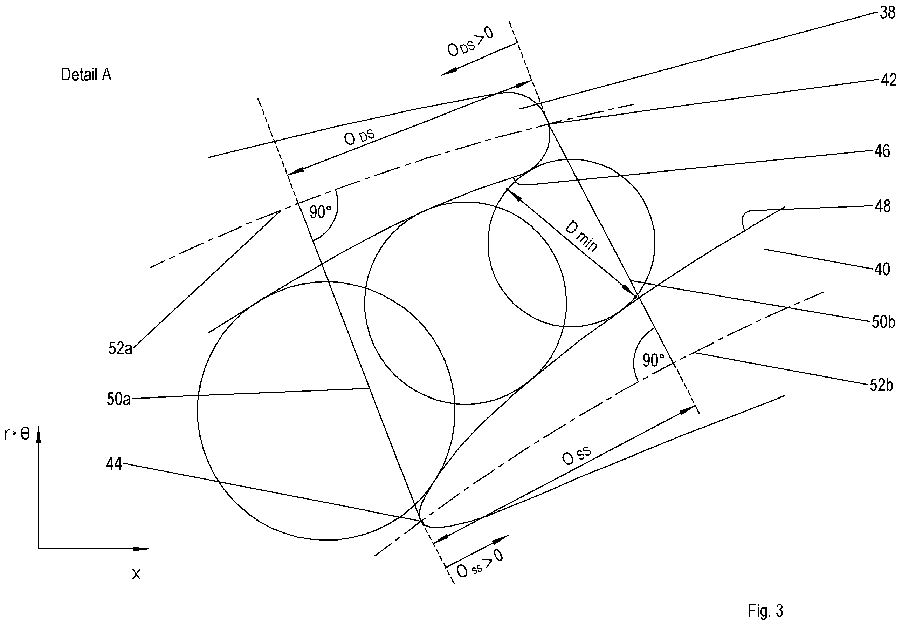

Wie in der Detailansicht A in Figur 3 gezeigt, weist die Schaufelreihengruppe jeweils im Bereich einer Hinterkante HK(i) 42 einer der stromaufwärtigen bzw. vorderen Schaufeln 38 und jeweils im Bereich einer Vorderkante VK(i+1) 44 einer der stromabwärtigen bzw. hinteren Schaufel 40 einen Engquerschnitt Dₘᵢₙ, einen druckseitigen Überdeckungsgrads O_{DS} und einen saugseitigen Überdeckungsgrads O_{SS} auf.

Der Engquerschnitt Dₘᵢₙ wird bei diesem Ausführungsbeispiel durch die Ermittlung des geringsten Abstandes (Kreis kleinsten Radius) zwischen einer Druckseite 46 der vorderen Schaufeln 38 und einer Saugseite 48 der hinteren Schaufeln 40 bestimmt. Da die Schaufeln 38, 40 düsenartig zueinander positioniert sind, befindet sich der Engquerschnitt Dₘᵢₙ nahe den Hinterkanten 42 der vorderen Schaufeln 38 und entfernt von den Vorderkanten 44 der hinteren Schaufeln 40.

Durch eine erfindungsgemäße radial veränderliche Positionierung der vorderen und der hinteren Schaufelreihe ist es möglich, dass der Engquerschnitt Dₘᵢₙ in einer Ebene zwischen der Druckseite 46 der vorderen Schaufelreihe und der Saugseite 48 der hinteren Schaufelreihe liegt, dann aber in Richtung einer anderen Ebene so weit ansteigt, dass sich die hintere Schaufelreihe tatsächlich näher an der Saugseite 48 der vorderen Schaufelreihe befindet. Im Folgenden beziehen sich die in den Figuren gezeigten Verlaufsbeispiele immer auf eine feste Schaufelseite.

Die Überdeckungsgrade O_{DS} und O_{SS} werden getrennt für die Druckseite 46 und die Saugseite 48 bestimmt. Jede Schaufelreihe weist einen druck- und einen saugseitigen Überdeckungsgrad O_{DS} und Oss auf, wobei der Überdeckungsgrad O_{DS}, O_{SS} bevorzugt wird, welcher mit der näher gelegenen Schaufeloberfläche 46, 48 gebildet wird.

Der druckseitige Überdeckungsgrad O_{DS} wird durch Fällen eines Lotes 50a von der Vorderkante 44 der hinteren Schaufel 40 auf eine Skelettlinie 52a der vorderen Schaufel 38 ermittelt. Der Abstand zwischen der Hinterkante 42 der vorderen Schaufel 38 und dem Schnittpunkt zwischen dem Lot 50a und der Skelettlinie 52a ist der Überdeckungsgrad O_{DS}.

Der saugseitige Überdeckungsgrad O_{SS} wird durch Fällen eines Lotes 50b von der Hinterkante 42 der vorderen Schaufel 38 auf eine Skelettlinie 52b der hinteren Schaufel 40 bestimmt. Der Abstand zwischen der Vorderkante 44 und dem Schnittpunkt zwischen dem Lot 50b und der Skelettlinie 52b der hinteren Schaufel 40 ist der Überdeckungsgrad O_{SS}.

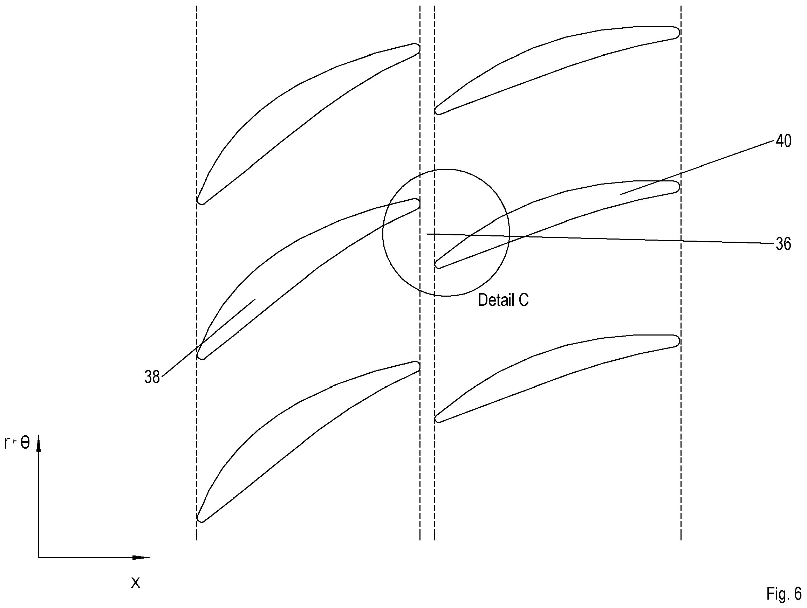

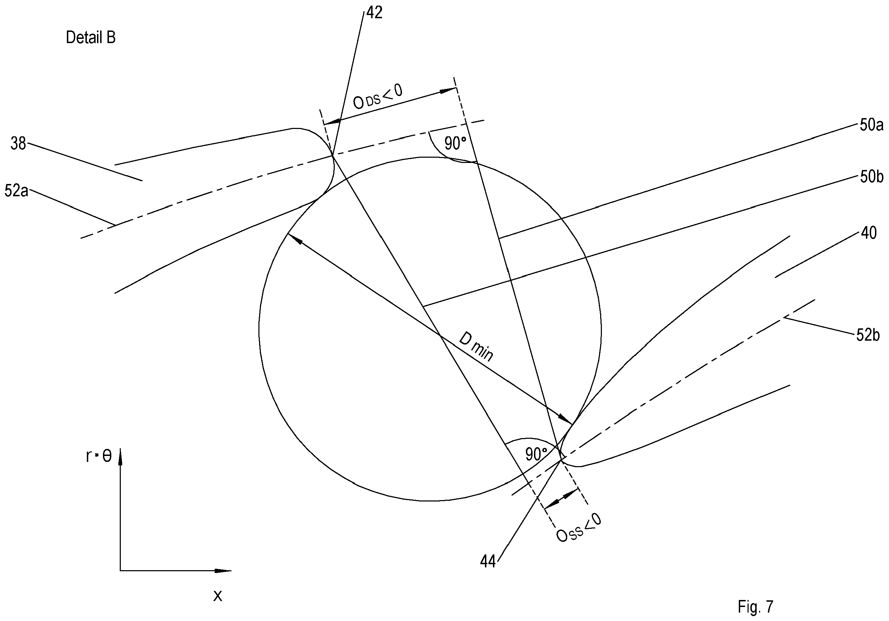

Die Überdeckungsgrade O_{DS}, O_{SS} werden grundsätzlich positiv von der jeweiligen Kante 42, 44 in Richtung der entsprechenden Schaufel 40, 38 bestimmt. In dem gezeigten Ausführungsbeispiel haben die Überdeckungsgrade O_{DS}, O_{SS} somit positive Werte (O_{DS}>0, O_{SS}>0), wobei der druckseitige Überdeckungsgrad O_{DS} kleinere positive Werte als der saugseitige Überdeckungsgrad O_{SS} annimmt (O_{DS}< O_{SS}). Wie in den Figuren 6 und 7 skizziert, können auch negative Überdeckungsgrade O_{DS}, O_{SS} gebildet werden.

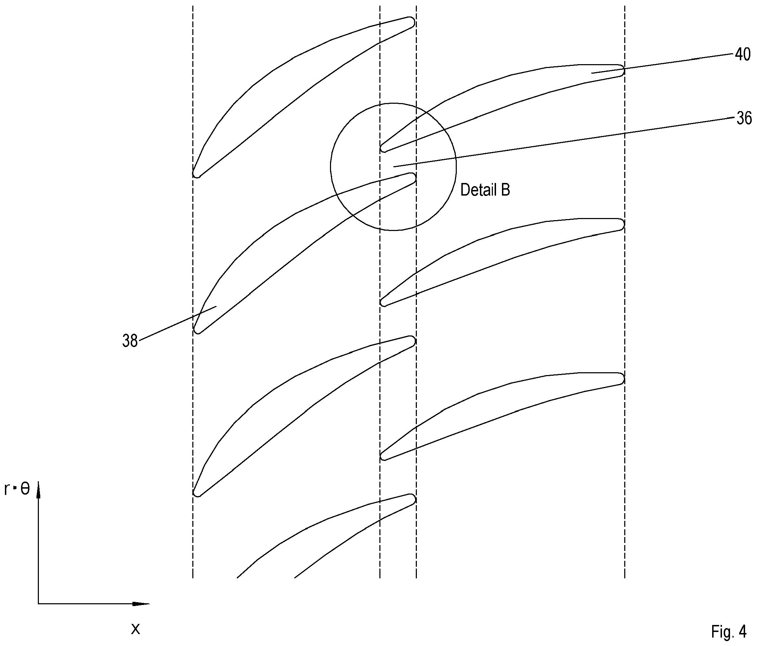

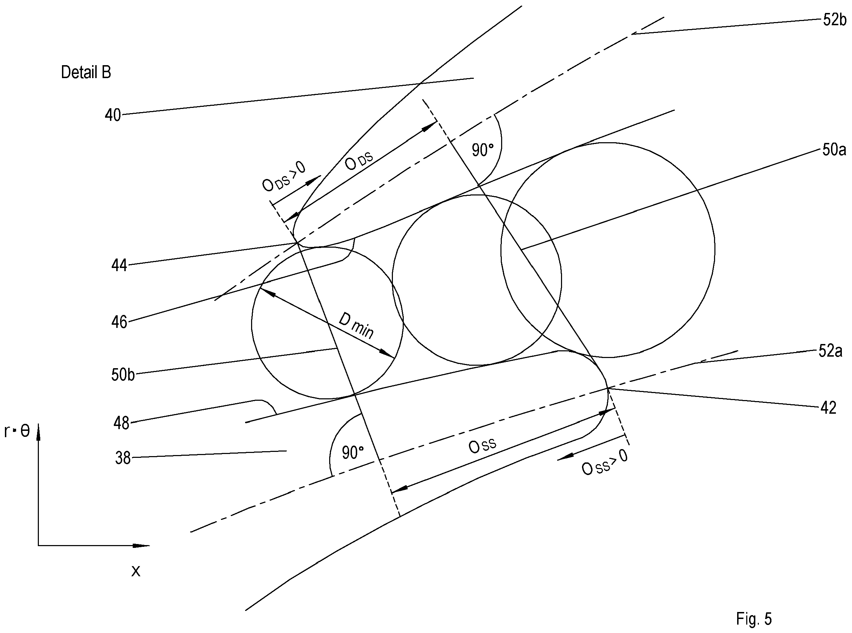

In den Figuren 4 und 5 sind der Engquerschnitt Dₘᵢₙ und die Überdeckungsgrade O_{DS}, Oss bei Diffusoranordnung einer vorderen Schaufelreihe zu einer hinteren Schaufelreihe skizziert. Hierzu sind die hinteren Schaufeln 40 saugseitig der vorderen Schaufeln 38 angeordnet, so dass ein Strömungskanal 36 zwischen den Schaufeln 38, 40 diffusorartig erweitert ist. "Saugseitig" heißt nahe der Saugseite einer vorderen Schaufel 38 und entfernt von einer Druckseite einer benachbarten vorderen Schaufel 38.

Der Engquerschnitt Dₘᵢₙ wird bei diesem Ausführungsbeispiel jeweils zwischen der Saugseite 48 der vorderen Schaufelreihe und der Druckseite 46 der hinteren Schaufelreihe bestimmt. Da die Schaufeln 38, 40 diffusorartig zueinander positioniert sind, befindet sich der Engquerschnitt Dₘᵢₙ nahe den Vorderkanten 44 der hinteren Schaufeln 40 und somit entfernt von den Hinterkanten 42 der vorderen Schaufeln 38.

Die Überdeckungsgrade O_{DS}, O_{SS} haben positive Werte (O_{DS}>0, O_{SS}>0), wobei entsprechend dem vorherigen Ausführungsbeispiel nach den Figuren 2 und 3 der druckseitige Überdeckungsgrad O_{DS} kleiner als der saugseitige Überdeckungsgrad O_{SS} (O_{DS}< Oss) ist.

Der druckseitige Überdeckungsgrad O_{DS} wird durch Fällen eines Lotes 50a von der Hinterkante 42 der vorderen Schaufel 38 auf eine Skelettlinie 52b der hinteren Schaufel 40 bestimmt. Der Abstand zwischen der Vorderkante 44 und dem Schnittpunkt zwischen dem Lot 50a und der Skelettlinie 52b der hinteren Schaufel 40 ist der Überdeckungsgrad O_{DS}.

Der saugseitige Überdeckungsgrad O_{SS} wird durch Fällen eines Lotes 50b von der Vorderkante 44 der hinteren Schaufel 40 auf eine Skelettlinie 52a der vorderen Schaufel 38 ermittelt. Der Abstand zwischen der Hinterkante 42 der vorderen Schaufel 38 und dem Schnittpunkt zwischen dem Lot 50b und der Skelettlinie 52a ist der Überdeckungsgrad O_{SS}.

In den Figuren 6 und 7 ist eine Schaufelreihengruppe gezeigt, deren vorderen Schaufeln 38 und hinteren Schaufeln 40 negative Überdeckungsgrade O_{DS}, O_{SS} (O_{DS}<0, O_{SS}<0) zeigen. Dabei nimmt der druckseitige Überdeckungsgrad O_{DS} größere negative Werte als der saugseitige Überdeckungsgrad O_{SS} (O_{DS}< O_{SS}) an. Die hinteren Schaufeln 40 sind druckseitig der vorderen Schaufeln 38 angeordnet. Zur Darstellung der negativen Überdeckungsgrade O_{DS}, O_{SS} werden die Skelettlinien 52a, 52b der Schaufeln 38, 40 linear extrapoliert. Bevorzugterweise wird bei negativer Überdeckung der Engquerschnitt Dₘᵢₙ bis etwa 10% einer jeweiligen Schaufelsehnenlänge bestimmt. Aufgrund der negativen Überdeckungsgrade O_{DS}, O_{SS} befindet sich der Engquerschnitt Dₘᵢₙ im Unterschied zu den vorhergehenden Ausführungsbeispielen nahe den Hinterkanten 42 der vorderen Schaufeln 48 und nahe den Vorderkanten 44 der hinteren Schaufeln 40.

Der druckseitige Überdeckungsgrad O_{DS} wird durch Fällen eines Lotes 50a von der Vorderkante 44 der hinteren Schaufel 40 auf die extrapolierte Skelettlinie 52a der vorderen Schaufel 38 ermittelt. Der Abstand zwischen der Hinterkante 42 der vorderen Schaufel 38 und dem Schnittpunkt zwischen dem Lot 50a und der extrapolierten Skelettlinie 52a ist der Überdeckungsgrad O_{DS}.

Der saugseitige Überdeckungsgrad O_{SS} wird durch Fällen eines Lotes 50b von der Hinterkante 42 der vorderen Schaufel 38 auf die extrapolierte Skelettlinie 52b der hinteren Schaufel 40 bestimmt. Der Abstand zwischen der Vorderkante 44 und dem Schnittpunkt zwischen dem Lot 50b und der extrapolierten Skelettlinie 52b der hinteren Schaufel 40 ist der Überdeckungsgrad O_{SS}.

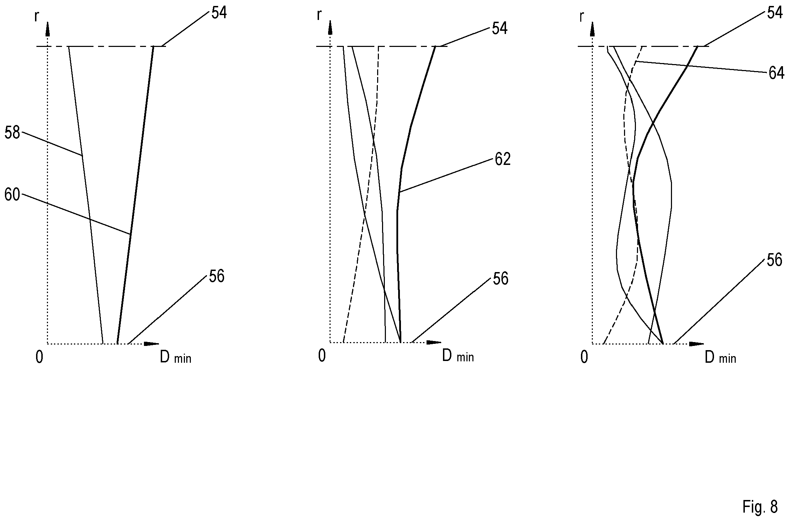

Wie in Figur 8 verdeutlicht, kann der Engquerschnitt Dₘᵢₙ erfindungsgemäß ausgehend von einer Hauptstrompfadmitte bzw. einer Mittelschnittlinie 54 in Richtung zumindest einer Hauptstrombegrenzung 56 variieren. Die zumindest eine Hauptstrombegrenzung stellt einen naben- oder gehäuseseitigen Bereich der Strömungsmaschine dar und ist zum Beispiel unmittelbar ein Naben- oder Gehäuseabschnitt oder ein Schaufeldeckband. Beispielhaft sind im Folgenden einige Verläufe des Engquerschnitts Dₘᵢₙ erläutert. Die sonstigen in Figur 8 gezeigten Engquerschnittsverläufe Dₘᵢₙ stellen weitere Ausführungsbeispiele dar, auch wenn auf diese nicht ausdrücklich in der Beschreibung erläutert werden.

Der Engquerschnitt Dₘᵢₙ kann, wie in der linken Darstellung gezeigt, linear verlaufen und beispielsweise stetig zunehmen (Gerade 58). Ebenso kann er linear verlaufen und stetig abnehmen (Gerade 60).

Wie in der mittleren Darstellung gezeigt, kann der Engquerschnitt Dₘᵢₙ ebenfalls kurvenförmige Verläufe annehmen und z.B. von der Hauptstrompfadmitte 54 in Richtung der Hauptstrombegrenzung 56 über einen Bereich der radialen Höhe abnehmen und dann über einen Höhenbereich konstant verlaufen (Kurve 62).

Wie in der rechten Darstellung gezeigt, kann der Engquerschnitt Dₘᵢₙ auch nur über einen Höhenbereich in Richtung der Hauptstrombegrenzung 56 ab- oder zunehmen, dann über einen Höhenbereich wieder zu- bzw. abnehmen und/oder über einen restlichen Höhenbereich konstant verlaufen. Beispielsweise wird auf die S-förmige Linie 64 verwiesen, die ausgehend von der Hauptstrompfadmitte 54 in Richtung der Hauptstrombegrenzung 56 über einen Höhenbereich abnimmt, dann über einen Höhenbereich zunimmt und schließlich über einen Höhenbereich wieder abnimmt.

Der Engquerschnitt Dₘᵢₙ kann ausgehend von der Hauptstrompfadmitte 54 in Richtung beider Hauptstrombegrenzungen 56 variieren, wobei er dabei in Richtung der nabenseitigen Hauptstrombegrenzung und in Richtung der gehäuseseitigen Hauptstrombegrenzung unterschiedliche Verläufe aufweisen kann.

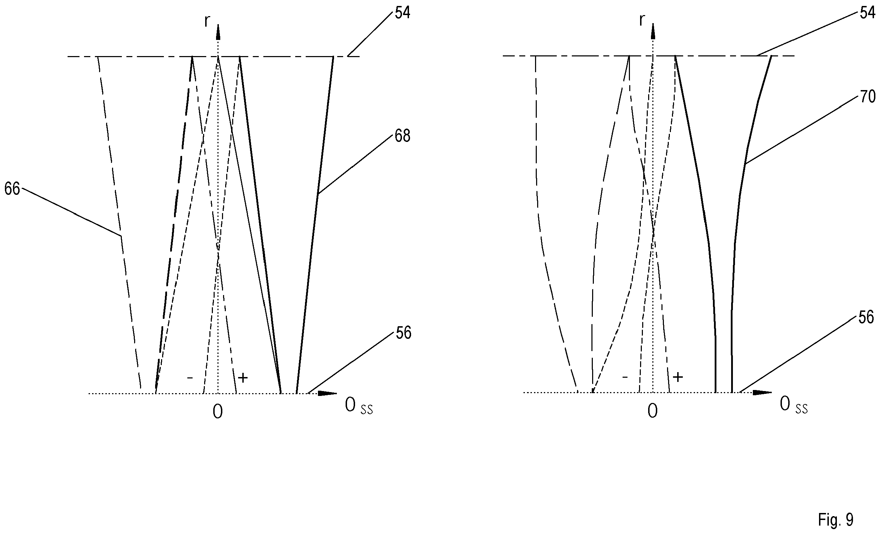

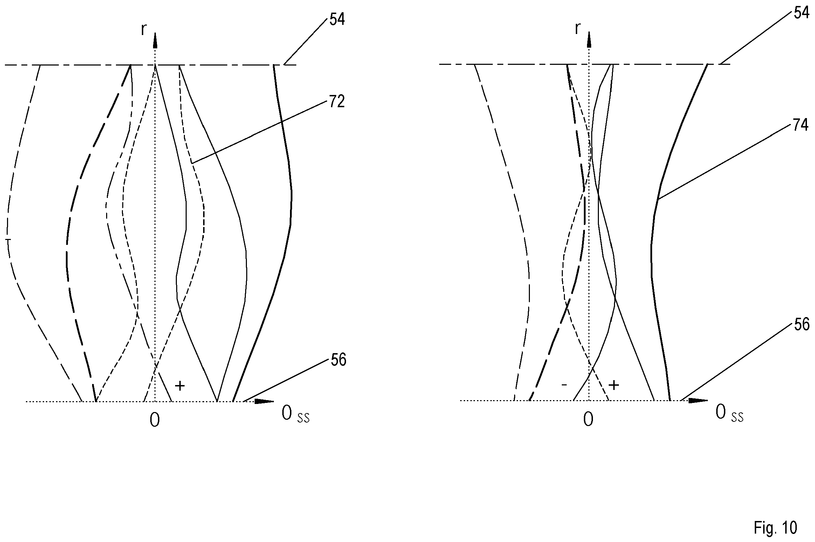

Wie in den Figuren 9 und 10 anhand von beispielhaften Verläufen des saugseitigen Überdeckungsgrades O_{SS} verdeutlicht, können die Überdeckungsgrade O_{SS}, O_{DS} erfindungsgemäß ausgehend von der Hauptstrompfadmitte 54 in Richtung zumindest einer der Hauptstrombegrenzungen 56 variieren. Die druckseitigen Überdeckungsgrade O_{DS} weisen im Wesentlichen analoge Verläufe auf. Beispielhaft sind im Folgenden einige Verläufe des saugseitigen Überdeckungsgrades O_{SS} erläutert. Die sonstigen in Figur 8 gezeigten saugseitigen Überdeckungsgrades O_{SS} stellen weitere sich auch auf die druckseitigen Überdeckungsgrade O_{DS} erstreckende Ausführungsbeispiele dar, auch wenn auf diese nicht ausdrücklich in der Beschreibung erläutert werden.

Wie in der linken Darstellung nach Figur 9 gezeigt, kann der Überdeckungsgrad O_{SS} linear verlaufen und beispielsweise stetig zunehmen (Gerade 66) oder stetig abnehmen (Gerade 68). Dabei bedeutet der Begriff "zunehmen" auch einen Übergang von negativen auf positive Werte. Der Begriff "abnehmen" bedeutet ebenso einen Übergang von positiven auf negative Werte, sowie den betragsmäßigen Anstieg negativer Werte.

Wie in der rechten Darstellung in Figur 9 gezeigt, kann der Überdeckungsgrad O_{SS} auch kurvenförmige Verläufe aufweisen. Wie beispielsweise anhand von Kurve 70 verdeutlicht, kann der Überdeckungsgrad O_{SS} ausgehend von der Hauptstrompfadmitte 54 in Richtung der Hauptstrombegrenzung 56 über einen Höhenbereich abnehmen und dann über einen Höhenbereich konstant verlaufen.

Wie in den Darstellungen nach Figur 10 gezeigt, kann der Überdeckungsgrad O_{SS} nur über einen Höhenbereich in Richtung der Hauptstrombegrenzung 56 ab- oder zunehmen, dann über einen Höhenbereich wieder zu- bzw. abnehmen und/oder über einen restlichen Höhenbereich konstant verlaufen. Beispielsweise wird auf die S-förmige Linie 72 in der linken Darstellung verwiesen, die ausgehend von der Hauptstrompfadmitte 54 in Richtung der Hauptstrombegrenzung 56 einen abnehmenden Überdeckungsgrad O_{SS}, dann einen zunehmenden Überdeckungsgrad O_{SS} und dann einen wieder abnehmenden Überdeckungsgrad O_{SS} zeigt. Ergänzend wird auf den durch den Bogen 74 skizzierten Überdeckungsgrad O_{SS} in der rechten Darstellung verwiesen, der ausgehend von der Hauptstrompfadmitte 54 in Richtung der Hauptstrombegrenzung 56 über einen Höhenbereich einen abnehmenden und dann über einen Höhenbereich einen zunehmenden Verlauf aufweist.

Der Überdeckungsgrad O_{SS} bzw. die Überdeckungsgrade O_{SS}, O_{DS} kann/können ausgehend von der Hauptstrompfadmitte 52 in Richtung beider Hauptstrombegrenzungen 56 variieren, wobei er/sie dabei in Richtung der nabenseitigen Hauptstrombegrenzung und in Richtung der gehäuseseitigen Hauptstrombegrenzung unterschiedliche Verläufe aufweisen kann/können.

Offenbart ist eine Strömungsmaschine mit zumindest einer Schaufelreihengruppe, die in einem Hauptstrompfad angeordnet und zumindest zwei in Hauptstromrichtung betrachtet benachbarte Schaufelreihen mit jeweils einer Vielzahl von Schaufeln 38, 40 aufweist, wobei ein Engquerschnitt und zumindest ein Überdeckungsgrad zwischen den Schaufeln der stromauf wärtigen Schaufelreihe und den Schaufeln der stromabwärtigen Schaufelreihe ausgehend von einer Hauptstrompfadmitte in Richtung einer zumindest einer Hauptstrombegrenzung variieren.

### Bezugszeichenliste

- 2: Nabe
- 4: Gehäuse
- 6: Rotorachse
- 8: Hauptstrompfad
- 10: rotorseitige Schaufelreihengruppe
- 12: statorseitige Schaufelreihengruppe
- 14: verstellbare Schaufelreihengruppe
- 16: Schaufel
- 18: Schaufel
- 20: Spalt
- 22: Drehteller
- 24: Drehteller
- 26: Querachse
- 28: Hinterkante
- 30: Vorderkante
- 32: Schaufel
- 34: Hauptstrompfadmitte
- 36: Strömungskanal
- 38: vordere Schaufel
- 40: hintere Schaufel
- 42: Hinterkante
- 44: Vorderkante
- 46: Druckseite
- 48: Saugseite
- 50a, b: Lot
- 52a, b: Skelettlinie
- 54: Hauptstrompfadmitte
- 56: Hauptstrombegrenzung
- 58: Gerade
- 60: Gerade
- 62: Linie
- 64: Kurve
- 66: Gerade
- 68: Gerade
- 70: Kurve
- 72: Linie
- 74: Bogen

- Dₘᵢₙ: Engquerschnitt
- O_{DS}: Überdeckungsgrad druckseitig
- Oss: Überdeckungsgrad schaufelseitig

## Patentansprüche

1. Strömungsmaschine mit zumindest einer Schaufelreihengruppe, die in einem Hauptstrompfad angeordnet ist und zumindest zwei in Hauptstromrichtung betrachtet benachbarte Schaufelreihen mit jeweils einer Vielzahl von Schaufeln (38, 40) aufweist, **dadurch gekennzeichnet, dass** ein Engquerschnitt (Dₘᵢₙ) und ein Überdeckungsgrad (O_{DS}, Oss) zwischen den Schaufeln (38) der stromaufwärtigen Schaufelreihe und den Schaufeln (40) der stromabwärtigen Schaufelreihe ausgehend von einer Hauptstrompfadmitte (54) in Richtung zumindest einer Hauptstrombegrenzung (56) variieren, wobei der Engquerschnitt (Dₘᵢₙ) zunimmt und durch eine Ermittlung des geringsten Abstandes zwischen einer Druckseite (46) der stromaufwärtigen Schaufeln (38) und einer Saugseite (48) der stromaufwärtigen Schaufeln (40) bestimmt ist, der Überdeckungsgrad (O_{DS}, O_{SS}) zunimmt und durch Fällen eines Lotes (50a) von einer Vorderkante (44) der stromaufwärtigen Schaufel 40 auf eine Skelettlinie (52a) der stromauf wertigen Schaufel (38) ermittelt ist, wobei ein Abstand zwischen der Hinterkante (42) der stromaufwärtigen Schaufel (38) und dem Schnittpunkt zwischen dem Lot (50a) und der Skelettlinie (52a) der Überdeckungsgrad (O_{DS}) ist, oder durch Fällen eines Lotes (50b) von der Hinterkante (42) der stromaufwärtigen Schaufel (38) auf eine Skelettlinie (52b) der stromabwärtigen Schaufel (40) ermittelt ist, wobei ein Abstand zwischen der Vorderkante (44) und dem Schnittpunkt zwischen dem Lot (50b) und der Skelettlinie (52b) der stromaufwärtigen Schaufel (40) der Überdeckungsgrad (O_{SS}) ist, und wobei der Überdeckungsgrad (O_{DS}, O_{SS}) positiv von der jeweiligen Kante (42, 44) in Richtung der entsprechenden Schaufel (38, 40) bestimmt ist, und wobei die Hauptstrombegrenzung (56) einen naben- oder gehäuseseitigen Bereich der Strömungsmaschine darstellt.

2. Strömungsmaschine nach Anspruch 1, wobei der Engquerschnitt (Dₘᵢₙ) in Richtung der Hauptstrombegrenzung (56) stetig zunimmt.

3. Strömungsmaschine nach Anspruch 2, wobei der Engquerschnitt (Dₘᵢₙ) in Richtung der Hauptstrombegrenzung (56) zunimmt und dann abnimmt.

4. Strömungsmaschine nach Anspruch 2, wobei der Engquerschnitt (Dₘᵢₙ) in Richtung der Hauptstrombegrenzung (56) zunimmt und dann konstant ist.

5. Strömungsmaschine nach einem der vorhergehenden Ansprüche, wobei der Überdeckungsgrad (O_{DS}; O_{SS}) in Richtung der Hauptstrombegrenzung (56) stetig zunimmt.

6. Strömungsmaschine nach Anspruch 5, wobei der Überdeckungsgrad (O_{DS}, O_{SS}) in Richtung der Hauptstrombegrenzung (56) zunimmt und dann abnimmt.

7. Strömungsmaschine nach Anspruch 5, wobei der Überdeckungsgrad (O_{DS}, Oss) in Richtung der Hauptstrombegrenzung (56) zunimmt und dann konstant ist.

8. Strömungsmaschine nach einem der vorhergehenden Ansprüche, wobei der Engquerschnitt (Dₘᵢₙ) und der Überdeckungsgrad (O_{DS}, O_{SS}) in Richtung beider Hauptstrombegrenzungen (56) variieren.

9. Strömungsmaschine nach Anspruch 8, wobei der Engquerschnitt (Dₘᵢₙ) und der Überdeckungsgrad (O_{DS}, O_{SS}) in Richtung der Hauptstrombegrenzungen (56) identisch sind oder variieren.

## Claims

1. A turbomachine with at least one blade row group that is arranged in one main flow path and has at least two adjacent blade rows when viewed in the main flow direction, each with a plurality of blades (38, 40), **characterized in that** a narrow cross section (Dₘᵢₙ) and a degree of overlap (O_{DS}, Oss) between the blades (38) of the upstream blade row and the blades (40) of the downstream blade row vary starting from a main flow path center (54) in the direction of at least one main flow limiter (56), wherein the narrow cross section (Dₘᵢₙ) increases and is determined by determining the shortest gap between a pressure side (46) of the upstream blades (38) and a suction side (48) of the upstream blades (40), the degree of overlap (O_{DS}, O_{SS}) increases and is determined by dropping a perpendicular (50a) from a leading edge (44) of the upstream blade (40) on a skeleton line (52a) of the upstream blade (38), wherein a gap between the trailing edge (42) of the upstream blade (38) and the intersection between the perpendicular (50a) and the skeleton line (52a) is the degree of overlap (O_{DS}), or is determined by dropping a perpendicular (50b) from the trailing edge (42) of the upstream blade (38) on a skeleton line (52b) of the downstream blade (40), wherein a gap between the leading edge (44) and the intersection between the perpendicular (50b) and the skeleton line of the upstream blade (40) is the degree of overlap (O_{SS}), and wherein the degree of overlap (O_{DS}, O_{SS}) is positively determined from the respective edge (42, 44) in the direction of the corresponding blade (38, 40), and wherein the main flow limiter (56) represents an area on the side of the hub or housing of the turbomachine.

2. The turbomachine according to claim 1, wherein the narrow cross section (Dₘᵢₙ) constantly increases in the direction of the main flow limiter (56).

3. The turbomachine according to claim 2, wherein the narrow cross section (Dₘᵢₙ) increases and then decreases in the direction of the main flow limiter (56).

4. The turbomachine according to claim 2, wherein the narrow cross section (Dₘᵢₙ) increases and then is constant in the direction of the main flow limiter (56).

5. The turbomachine according to one of the preceding claims, wherein the degree of overlap (O_{DS}, O_{SS}) constantly increases in the direction of the main flow limiter (56).

6. The turbomachine according to claim 5, wherein the degree of overlap (O_{DS}, O_{SS}) increases and then decreases in the direction of the main flow limiter (56).

7. The turbomachine according to claim 5, wherein the degree of overlap (O_{DS}, O_{SS}) increases and then is constant in the direction of the main flow limiter (56).

8. The turbomachine according to one of the preceding claims, wherein the narrow cross section (Dₘᵢₙ) and the degree of overlap (O_{DS}, O_{SS}) vary in the direction of both main flow limiters (56).

9. The turbomachine according to claim 8, wherein the narrow cross section (Dₘᵢₙ) and the degree of overlap (O_{DS}, O_{SS}) are identical or vary in the direction of the main flow limiter (56).

## Revendications

1. Turbomachine comprenant au moins un groupe de rangée d'aubes qui est disposé dans un trajet d'écoulement principal et au moins deux rangées d'aubes qui sont adjacentes par référence à la direction d'écoulement principal et qui comportent chacune une pluralité d'aubes (38, 40), **caractérisée en ce qu'**une section transversale étroite (Dₘᵢₙ) et un degré de chevauchement (O_{DS}, O_{SS}) entre les aubes (38) de la rangée d'aubes amont et les aubes (40) de la rangée d'aubes aval varient depuis un centre de trajet d'écoulement principal (54) en direction d'au moins une principale limite d'écoulement principal (56), la section transversale étroite (Dₘᵢₙ) augmentant et étant déterminée par détermination de la distance la plus courte entre un côté sous pression (46) de l'aube amont (38) et un côté sous dépression (48) de l'aube amont (40), le degré de chevauchement (O_{DS}, O_{SS}) augmentant et étant déterminé par abaissement d'une perpendiculaire (50a) d'un bord d'attaque (44) des aubes amont (40) sur une ligne moyenne de profil (52a) des aubes amont (38), la distance entre le bord de fuite (42) de l'aube amont (38) et l'intersection entre la perpendiculaire (50a) et la ligne moyenne de profil (52a) étant le degré de chevauchement (O_{DS}), ou étant déterminé par abaissement d'une perpendiculaire (50b) du bord de fuite (42) de l'aube amont (38) sur une ligne moyenne de profil (52b) de l'aube aval (40), la distance entre le bord d'attaque (44) et l'intersection entre la perpendiculaire (50b) et la ligne moyenne de profil (52b) de l'aube amont (40) étant le degré de chevauchement (O_{SS}), et le degré de chevauchement (O_{DS}, O_{SS}) étant déterminé positivement par le bord respectif (42, 44) dans la direction de l'aube correspondante (38, 40), et la limite d'écoulement principal (56) constituant une zone côté moyeu ou boîtier de la turbomachine.

2. Turbomachine selon la revendication 1, dans laquelle la section transversale étroite (Dₘᵢₙ) augmente continument en direction de la limite d'écoulement principal (56).

3. Turbomachine selon la revendication 2, dans laquelle la section transversale étroite (Dₘᵢₙ) augmente puis diminue en direction de la limite d'écoulement principal (56).

4. Turbomachine selon la revendication 2, dans laquelle la section transversale étroite (Dₘᵢₙ) augmente puis est constante en direction de la limite d'écoulement principal (56).

5. Turbomachine selon l'une des revendications précédentes, dans laquelle le degré de chevauchement (O_{DS}, O_{SS}) augmente continument en direction de la limite d'écoulement principal (56).

6. Turbomachine selon la revendication 5, dans laquelle le degré de chevauchement (O_{DS}, O_{SS}) augmente puis diminue en direction de la limite d'écoulement principal (56).

7. Turbomachine selon la revendication 5, dans laquelle le degré de chevauchement (O_{DS}, O_{SS}) augmente puis est constant en direction de la limite d'écoulement principal (56).

8. Turbomachine selon l'une des revendications précédentes, dans laquelle la section transversale étroite (Dₘᵢₙ) et le degré de chevauchement (O_{DS}, O_{SS}) varient en direction des deux limites d'écoulement principal (56).

9. Turbomachine selon la revendication 8, dans laquelle la section transversale étroite (Dₘᵢₙ) et le degré de chevauchement (O_{DS}, O_{SS}) sont identiques ou varient en direction des limites d'écoulement principales (56).
